# EUROPEAN PATENT APPLICATION

(11) **EP 2 187 492 A1**
(43) Date of publication of application: **19.05.2010**
(21) Application number: 09013740.7
(22) Date of filing: 02.11.2009
(51) Int. Cl.: H02G 3/12, H02G 3/14

(54) **Mortar guard, particularly for protecting flush-mount junction boxes**

(30) Priority: 18.11.2008 IT MI20082048
(71) Applicant: GEWISS S.p.A., 24069 Cenate Sotto (Bergamo) (IT)
(72) Inventor: Bosatelli, Domenico, 24069 Cenate sotto (Bergamo) (IT)
(74) Representative: Forattini, Amelia

(57) **Abstract**

A mortar guard, particularly for protecting flush-mount junction boxes, has a plate, an engagement means and a guiding means which are formed monolithically along the perimeter of the plate and allow a stable and temporary association of the mortar guard with a box that is flush-mounted in a wall. The engagement means and the guiding means allow to apply the mortar guard to the box and to detach it from the box several times in order to allow to reuse it several times. The mortar guard can also be used to seal the box, when installed, acting as an additional cover having thermal and acoustic insulation characteristics.

## Description

The present invention relates to a mortar guard particularly for protecting flush-mount junction boxes.

As is known, junction boxes that are flush-mounted in walls are used for electrical connections in the construction sector.

When the box is embedded in the wall and the conduits have been placed in the chases and inserted in the box, the operator is ready to plaster the wall, generally by means of an apparatus that sprays mortar onto the wall.

At this point, in order to avoid filling the box with mortar, a so-called mortar barrier or mortar guard is used which is normally constituted by a disposable cardboard sheet, which is fixed to the box, flush to the wall.

Once the operation of plastering and skimming by means of a rod has ended, the cardboard panel with the mortar applied thereto is removed, in order to clear the junction box.

Cardboard panels have the drawback that they are not mechanically strong, both because the cardboard becomes impregnated with water and because the pressure with which the mortar is sprayed onto the wall can be so high as to break through the cardboard panel.

Also, cardboard panels are not always capable of reliably containing the conduits inside the box.

Another drawback of cardboard panels is constituted by the fact that they cannot be reused and are removed and disposed after plastering.

The aim of the present invention is to provide a mortar guard that overcomes the drawbacks of the cited prior art.

An object of the invention is to provide a mortar guard that can be reused several times.

Another object of the invention is to provide a mortar guard which is particularly useful to protect boxes installed in construction sites where automatic apparatuses for spraying mortar onto walls and for finishing the walls by means of a rod are used.

Another object is to provide a versatile mortar guard that can be used also as an additional insulating lid for the installed box.

Another object of the present invention is to provide a mortar guard that, by virtue of its particular constructive characteristics, is capable of giving the greatest assurances of reliability and safety in use.

Another object of the present invention is to provide a mortar guard that can be easily manufactured by using commonly commercially available elements and materials and is also competitive from an economic standpoint.

This aim and these and other objects that will become better apparent hereinafter are achieved by a mortar guard, particularly for protecting flush-mount junction boxes, characterized in that it comprises a plate, an engagement means and a guiding means which are formed monolithically along the perimeter of said plate and are suitable to allow stable and temporary association of the mortar guard with a box that is flush-mounted in a wall, said engagement means and said guiding means allowing to apply said mortar guard to said box and to detach said mortar guard from said box several times in order to allow to reuse said mortar guard several times.

The association of the mortar guard with the box flush-mounted in the wall also allows to avoid the exit of the wiring guiding conduits from the box itself.

Further characteristics and advantages will become better apparent from the description of preferred but not exclusive embodiments of the invention, illustrated by way of non-limiting example in the accompanying drawings, wherein:

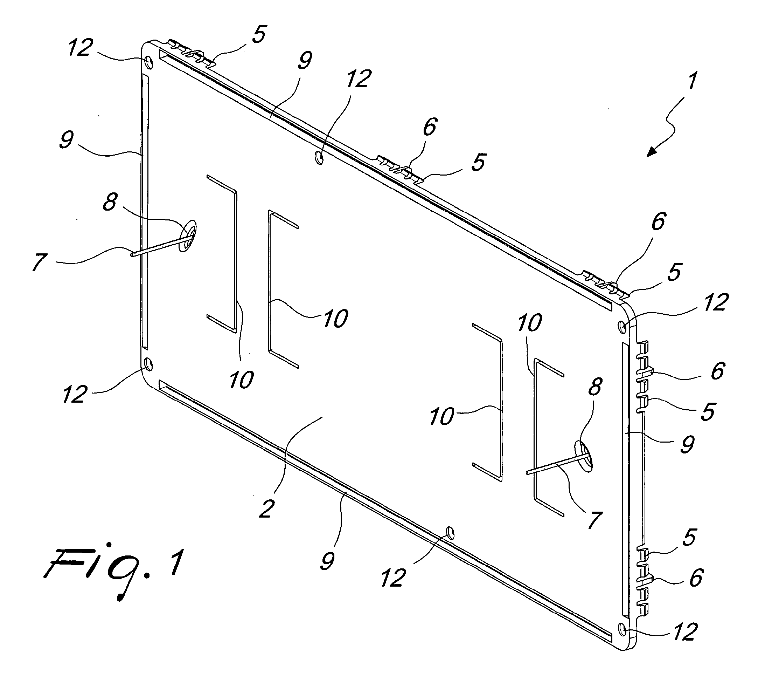

Figure 1 is a perspective view of the mortar guard according to the present invention;

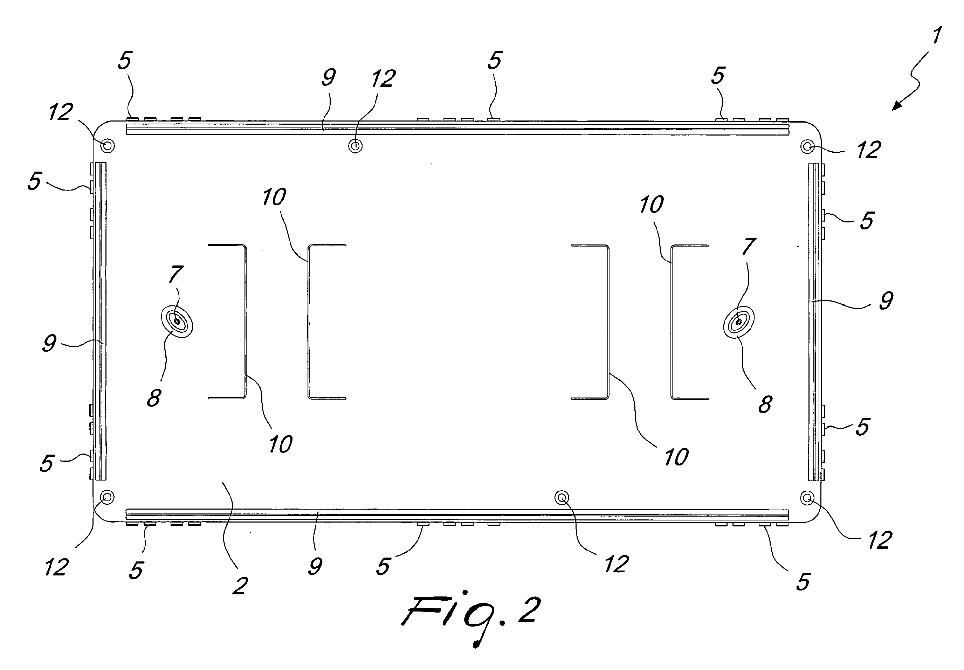

Figure 2 is a front view of the mortar guard according to the present invention;

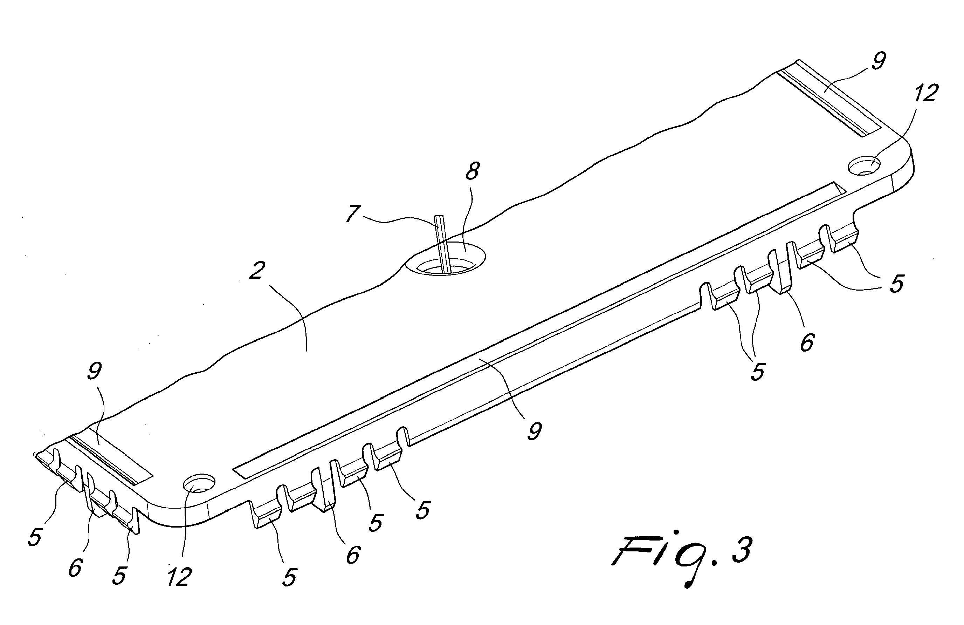

Figure 3 is a perspective view, in enlarged scale with respect to the preceding ones, which shows in detail the engagement and guiding means;

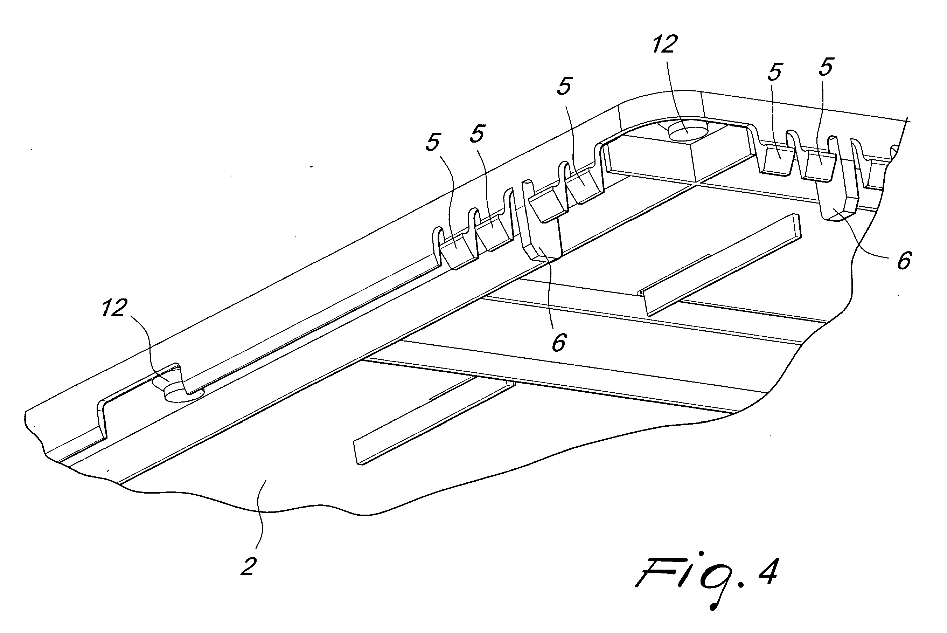

Figure 4 is a partial perspective view of the rear part of the mortar guard;
Figure 5 is a perspective view of the application of the mortar guard according to the present invention to a box that is flush-mounted in a wall prior to the application of mortar to the wall;
Figure 6 is a view, similar to the preceding one, of the mortar guard applied to the box;
Figure 7 is a view, similar to the preceding one, of the wall and of the mortar guard, both covered with mortar;
Figure 8 is a view, similar to the preceding one, of the step of removal of the mortar by using the perimetric slot as a guide;
Figure 9 is a view, similar to the preceding one, in the condition in which the mortar has been removed from the surface of the mortar guard;
Figure 10 is a view, similar to the preceding one, of the removal of the mortar guard.

With reference to the cited figures, the mortar guard according to the invention, generally designated by the reference numeral 1, comprises a plate 2, preferably made of technopolymer, having flexibility and penetration resistance characteristics.

The plate 2 comprises an engagement means and a guiding means, which are formed monolithically along the perimeter of the plate and allow the stable and temporary association of the mortar guard with a box 3 that is flush-mounted in a wall 4.

The application of the plate 2 to the box prevents the exit of the conduits from the box.

The engagement means is constituted by teeth 5 provided monolithically along the perimeter of the plate 2.

The teeth 5 are elastically deformable in order to allow engagement with the internal edge of the box 3.

The guiding means is constituted by guiding ribs 6, which also are provided monolithically and are preferably arranged at the teeth 5 so as to guide the insertion of the teeth 5 within the box and provide a stable support when the mortar guard is applied to the box.

The mortar guard 1 is also provided with an identification means, constituted by pins 7 applied at respective elliptical recesses 18 which are arranged diagonally on the outer surface of the plate 2.

Preferably, the pins 7 have an elliptical cross-section, which together with the elliptical shape of the recesses, facilitates a deformation in a preferential direction of the pins when the mortar is skimmed by means of a rod.

The outer surface of the plate 2 is also provided with a perimetric slot 9, which runs preferably along almost all of the lateral edges of the plate and is adapted to guide the operator in cleaning the surface during removal of the mortar.

The operator in fact cleans the surface by means of a trowel or other suitable tool, and the presence of the perimetric slot 9 allows the immediate identification of the edge of the mortar guard and therefore of the perimeter of the box, thus avoiding cutting into the mortar in the surrounding regions of the wall.

The mortar guard 1 also includes a grip means constituted by retracting handles, provided by means of cuts 10 that allow a localized deformation of the plate 2 so as to form central grip portions 11.

The cuts 10 allow to deform the plate 2, but prevent the mortar from penetrating within the box during plastering.

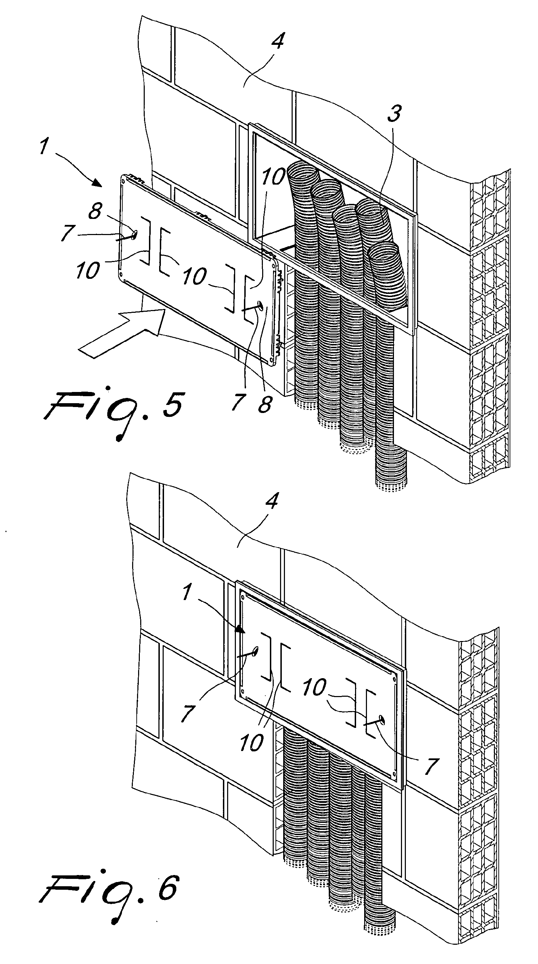

The operation of the mortar guard according to the present invention is illustrated schematically in the sequence of Figures 5-9.

When the box 3 is associated with the wall 4 and the conduits are placed within the chases and inserted in the box, the operator is ready to plaster the wall, generally with an apparatus that sprays the mortar onto the wall.

At this point, in order to prevent the mortar from filling the box, the mortar guard according to the present invention is used.

The mortar guard 1 is applied to the box 3 and, by means of the guiding ribs 6, is arranged within the perimeter of the box.

The engagement teeth 5 associated with each guiding rib 6 are adapted to keep the plate 2 gripped to the box 3 during plastering operations, thus also preventing the conduits from coming out the box.

If one wishes to reinforce the fastening of the plate, additional regions 12 are provided where it is possible to insert screws and provide a further fastening to the box.

Once inserted in the box, the plate 2 is fully flush-mounted, as visible in Figure 6, and it is possible to proceed with the application of the mortar 13.

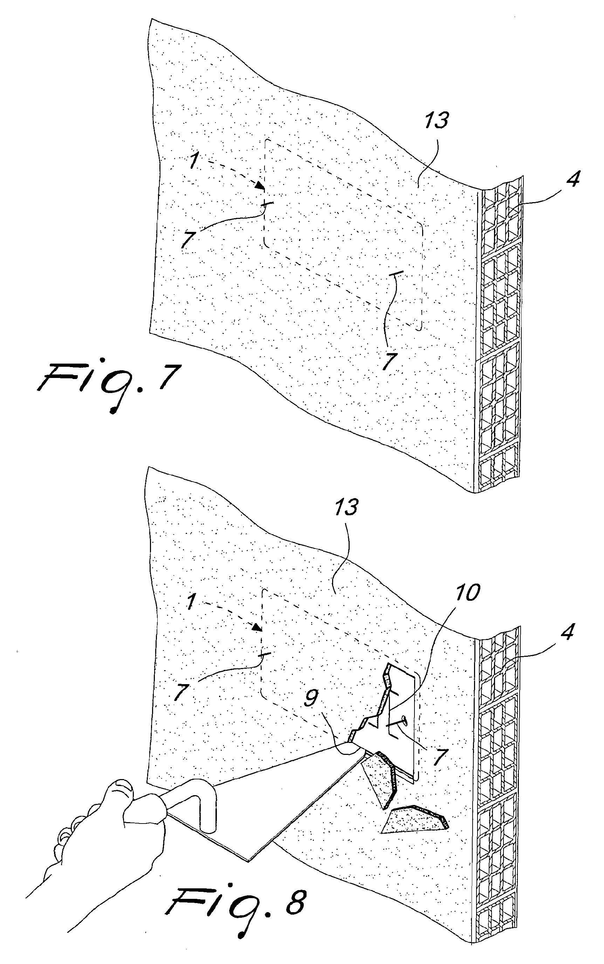

Once the mortar has been applied, the only members that protrude are the indicator pins 7, which allow the identification of the location of the box when it is completely covered, as shown schematically in Figure 7.

Once the box has been identified by means of the elliptical pins 7, the perimetric slot 9 guides the operator in cleaning the surface of the plate, by providing an abutment for the tip of the trowel or other tool used to remove the mortar from the surface of the plate, thus preventing cutting into the mortar in the surrounding regions of the wall, as visible in Figure 8.

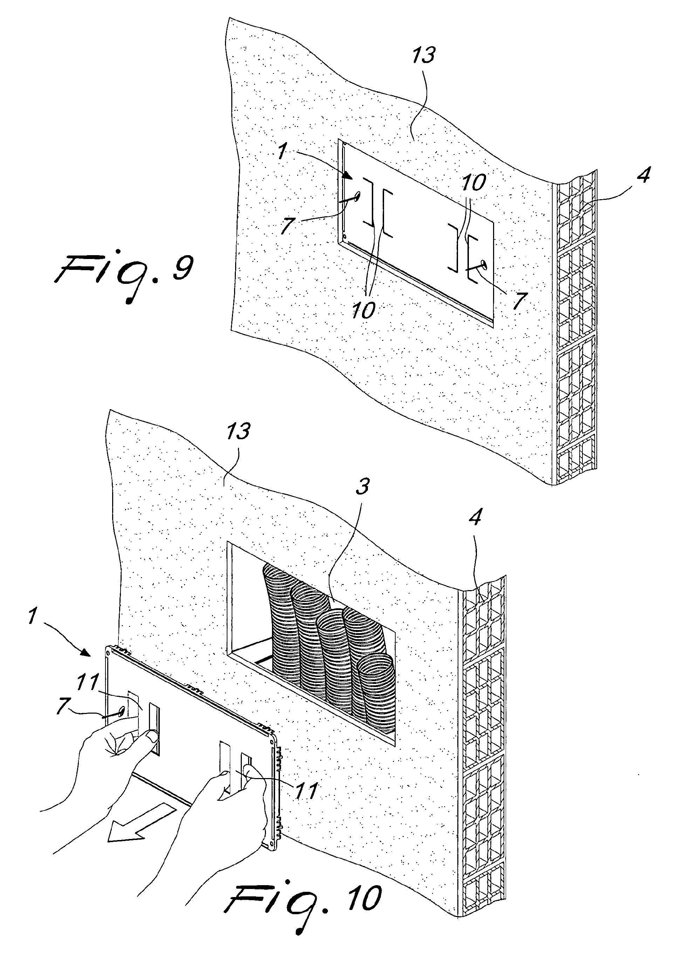

At this point, the mortar guard 1 is extracted by gripping the plate by means of the retracting handles 11. One's fingers or a tool are inserted in the flexible wings formed by the cuts 10 in order to open them and grip the central part 11, removing the mortar guard 1 by pulling it toward oneself, as shown schematically in Figure 9.

After cleaning it, the mortar guard can be reused.

In practice it has been found that the invention achieves the intended aim and objects, providing a mortar guard that can be reused several times and that is extremely effective in preventing the flush-mount junction box from being filled with mortar during plastering operations.

A particular feature of the mortar guard according to the present invention is constituted by the fact that it can be used to seal the box, once installed, acting as an additional lid which provides good acoustic and thermal insulation.

The mortar guard according to the invention can be manufactured in various sizes and preferably is manufactured in sizes that are functional with respect to the size of the box to which it will be applied.

This application claims the priority of Italian Patent Application No. M12008A002048, filed on November 18, 2008, the subject matter of which is incorporated herein by reference.

## Claims

1. A mortar guard, particularly for protecting flush-mount junction boxes, **characterized in that** it comprises a plate, an engagement means and a guiding means which are formed monolithically along the perimeter of said plate and are suitable to allow stable and temporary association of the mortar guard with a box that is flush-mounted in a wall, said engagement means and said guiding means allowing to apply said mortar guard to said box and to detach said mortar guard from said box several times in order to allow to reuse said mortar guard several times.

2. The mortar guard according to claim 1, **characterized in that** said plate is made of material having characteristics of flexibility and penetration resistance.

3. The mortar guard according to claim 1 or 2, **characterized in that** said engagement means is constituted by teeth formed monolithically along the perimeter of said plate, said teeth being elastically deformable in order to allow engagement with the internal edge of said box.

4. The mortar guard according to one or more of the preceding claims, **characterized in that** said guiding means is constituted by guiding ribs formed monolithically with said plate, said ribs being arranged at said teeth so as to guide the insertion of said teeth within the box and provide stable contact when said mortar guard is applied to said box.

5. The mortar guard according to one or more of the preceding claims, **characterized in that** it comprises an identification means constituted by pins applied at respective elliptical recesses arranged diagonally on the outer surface of the plate.

6. The mortar guard according to one or more of the preceding claims, **characterized in that** said pins have an elliptical cross-section which, together with the elliptical shape of the recesses, facilitates a deformation in a preferential direction of the pins when the mortar is skimmed by means of a rod.

7. The mortar guard according to one or more of the preceding claims, **characterized in that** the outer surface of said plate comprises a perimetric slot that runs along the lateral edges of said plate and is adapted to guide the operator in cleaning said surface during the removal of the mortar.

8. The mortar guard according to one or more of the preceding claims, **characterized in that** it comprises a grip means constituted by retracting handles provided by means of cuts that allow a localized deformation of the plate in such a manner as to form central grip portions.

9. The mortar guard according to one or more of the preceding claims, **characterized in that** said plate comprises additional fastening regions for the application of screws for fastening to said box.

10. The mortar guard according to one or more of the preceding claims, **characterized in that** it can be used to seal said box, when installed, acting as an additional cover having thermal and acoustic insulation characteristics.
